# FASCICULE DE BREVET EUROPEEN

(11) **EP 1 303 724 B1**
(45) Date de publication et mention de la délivrance du brevet: **05.01.2005**
(21) Numéro de dépôt: 01958167.7
(22) Date de dépôt: 24.07.2001
(51) Int. Cl.: F16L 37/084

(54) **EMBOUT DE CONNEXION RAPIDE**
SCHNELLVERBINDUNGSSTÜCK
QUICK-CONNECT COUPLING

(30) Priorité: 24.07.2000 FR 0009662
(43) Date de publication de la demande: 23.04.2003
(73) Titulaire: Etablissements CAILLAU, 92130 Issy-les-Moulineaux (FR)
(72) Inventeur: DETABLE, Pascal, F-41130 GIEVRES (FR); PREVOT, Fabrice, F-41130 SELLES SUR CHER (FR); RIGOLLET, Nicolas, F-41200 ROMORANTIN LANTHENAY (FR)
(74) Mandataire: Intès, Didier Gérard André
(86) Numéro de dépôt international: PCT/FR2001/002409
(87) Numéro de publication internationale: WO 2002/008655

(56) Documents cités:
- EP-A- 0 651 198
- EP-A- 0 961 071
- GB-A- 1 527 018
- US-A- 5 971 445

## Description

La présente invention concerne un embout de connexion rapide susceptible d'être emmanché sur un tube qui présente une surface d'accrochage sensiblement radiale distante de son extrémité libre, l'embout comprenant un corps qui présente une cavité interne ayant une première partie susceptible de coopérer avec des moyens d'étanchéité pour établir une liaison étanche avec le tube et une deuxième partie, qui est située entre la première partie de la cavité et l'entrée du corps de l'embout et dans laquelle est disposé un anneau de verrouillage retenu contre un arrachement hors du corps de l'embout par des moyens de retenue, cet anneau présentant au moins une zone de verrouillage située dans une région dans laquelle son rayon est minimum et au moins un pontet de déverrouillage situé dans une région dans laquelle son rayon est maximal, l'anneau étant susceptible, à partir d'une configuration de verrouillage dans laquelle la zone de verrouillage est apte à coopérer avec la surface d'accrochage du tube, d'être déformé élastiquement par une pression sur le pontet pour adopter une configuration de déverrouillage, la paroi de la cavité interne du corps présentant, dans sa portion axiale, au moins une fente qui débouche dans la deuxième partie de la cavité et à travers laquelle dépasse ledit pontet de déverrouillage, l'anneau de verrouillage étant constitué par une bande de métal déformée plastiquement pour présenter, au moins, ladite zone de verrouillage et ledit pontet.

Un tel embout de connexion rapide est connu par le document EP-A-0 651 198. Il donne globalement satisfaction, mais la demanderesse s'est aperçue qu'il pouvait être amélioré.

D'une part, le tube sur lequel l'embout du document EP-A-0 651 198 est destiné à être emmanché présente en général un bourrelet en saillie radiale qui définit la surface d'accrochage. Pour le verrouillage, l'anneau de verrouillage vient s'accrocher derrière un tel bourrelet. Du fait de son élasticité, il tend naturellement à épouser le contour du tube, de sorte qu'il se trouve plaqué contre ce dernier à l'arrière du bourrelet. Ainsi, on doit disposer, à l'arrière du bourrelet, d'un espace dont la longueur axiale correspond à la largeur de l'organe de verrouillage, mesurée dans la direction axiale de l'embout. Si cet espace est réduit, il faut diminuer la largeur de l'organe de verrouillage, ce qui risque toutefois de réduire sa rigidité et son élasticité.

Le document EP-A-0 511 891 montre un embout de connexion dans lequel l'organe de verrouillage est réalisé à partir d'un fil. Ceci ne convient pas à toutes les applications. En effet, pour obtenir une sécurité de verrouillage satisfaisante, on est conduit à choisir un fil de rigidité élevée. Dans ce cas, le déverrouillage par pression manuelle sur un pontet est difficile en raison du fait que la rigidité de l'anneau de verrouillage est élevée, comparé à la surface du pontet sur laquelle la pression est exercée.

Par ailleurs, lorsque l'anneau de verrouillage est fermé, il est plus aisé de raccorder ses extrémités si cet anneau est réalisé à partir d'une bande fine, que s'il est réalisé à partir d'un fil de section circulaire.

D'un autre côté, une bande plate de métal dont la largeur serait réduite risquerait de ne pas présenter la rigidité satisfaisante pour donner un effet de verrouillage suffisamment sûr.

Le document EP 0 961 071 divulgue un embout de connexion dont l'organe de verrouillage est formé à partir d'une bande ayant deux languettes dépassant sur l'un de ses bords longitudinaux. Lors du pliage de cette bande pour former l'organe de verrouillage, ces deux languettes sont repliées de manière à s'étendre sensiblement dans un plan perpendiculaire à l'axe de l'embout.

L'invention vise à perfectionner l'embout de connexion du type précité pour, en particulier, améliorer les performances de l'anneau de verrouillage en matière de rigidité et d'élasticité.

Ce but est atteint grâce au fait que la zone de verrouillage comprend une languette formée par un emboutissage formant un bossage, dirigé vers l'intérieur de l'anneau de déverrouillage et présentant un bord libre d'accrochage.

Avantageusement, ce bord libre est formé par une portion du bossage qui est entaillée dans la bande formant l'anneau de verrouillage.

En d'autres termes, la zone de verrouillage est formée par au moins un "crevé". Un crevé est réalisé par un emboutissage formant un bossage qui va jusqu'à traverser localement la bande pour découper une partie du bossage, qui forme ainsi une languette. Le bossage est formé vers l'intérieur de la bande, de telle sorte que l'extrémité libre de la languette (ou bord libre du crevé) soit dirigée vers l'axe et vers l'arrière de l'embout afin de s'accrocher sur la surface d'accrochage du tube.

Par exemple, l'outil d'emboutissage présente un bord vif qui, selon l'effort appliqué, entaille la bande localement. La bande est donc déformée par emboutissage et entaillée, sans perte de matière.

Le crevé est une zone fortement écrouie, ce qui lui permet d'être extrêmement résistant aux efforts longitudinaux, appliqués lors d'une tentative de déverrouillage par arrachement.

En général, le bord libre du crevé présente une concavité tournée vers la partie de ce crevé qui est rattachée à la bande, cette partie présentant avantageusement une concavité de sens opposé.

La partie de rattachement de la languette à la bande est située du côté de l'entrée de l'embout, tandis que le bord libre de la languette est tourné du côté opposé.

Ainsi, avec l'invention, la zone de verrouillage est formée de manière extrêmement simple, et est très résistante à l'arrachement. De plus, la partie active pour le verrouillage est le bord libre du crevé, qui représente un encombrement très inférieur à la largeur de la bande dans laquelle est formé l'examen de verrouillage.

De préférence, dans la région du pontet de déverrouillage, la bande dans laquelle est réalisé l'anneau de verrouillage est sensiblement parallèle à la direction axiale de l'embout.

Ainsi, pour le déverrouillage, l'utilisateur exerce une pression sur le pontet qui forme une surface perpendiculaire à la direction de l'effort de pression qui est appliqué radialement. On obtient ainsi une répartition optimum de cet effort de pression.

En revanche, dans la zone de verrouillage, l'arête de verrouillage formée par le bord libre du crevé est apte à coopérer avec différentes formes de surfaces d'accrochage sur le tube. Il peut s'agir de la face arrière d'un épaulement, d'un renflement ou autre, auquel cas l'effort de verrouillage est obtenu même si le tube présente un obstacle à l'arrière de ce renflement. La surface d'accrochage peut également être réalisée par une face sensiblement radiale d'une rainure circulaire ou semi-circulaire pratiquée dans le tube, auquel cas l'arête de verrouillage, qui est entrante, peut pénétrer dans cette rainure.

La demanderesse a en outre constaté que l'écrouissage de la partie du crevé qui le rattache à la bande augmente localement la rigidité de l'anneau et sa capacité de retour élastique après une sollicitation de déverrouillage. En effet, l'essentiel des déformations de l'anneau qui lui donnent sa forme générale (avec, en particulier, le pontet) sont réalisées par des pliures le long de lignes dirigées axialement. Le bossage qui forme le crevé est une déformation dans une autre direction, qui augmente localement la résistance mécanique de l'anneau. La pression exercée sur le pontet pour le déverrouillage ne modifie pas ou pratiquement pas la conformation de l'arête de verrouillage et est relativement rigide. Elle se comporte comme un tout, qui est simplement écarté de l'axe de l'embout lors du déverrouillage. Pour le verrouillage, elle reprend sa position initiale sans avoir été déformée. Sa forme reste donc optimale pour coopérer avec la surface d'accrochage, même après de nombreuses sollicitations de l'anneau.

Ce dernier est par exemple réalisé dans une bande métallique en acier inoxydable ou en acier ayant subi un traitement de surface le rendant résistant à la corrosion. L'acier a également subi une trempe ou une autre opération lui donnant une élasticité suffisante. La forme rentrante de l'arête de verrouillage augmente encore cette élasticité, précisément dans la région dans laquelle elle est la plus nécessaire.

Avantageusement, la zone de verrouillage comprend au moins deux languettes formées, chacune, par un bossage ayant un bord libre, avantageusement formé par entaillage.

Ces languettes peuvent être disposées de telle sorte que leurs bords libres soient sensiblement placés sur un arc de cercle correspondant à la forme de la surface d'accrochage. Ceci n'empêche pas que chaque languette puisse avoir de petites dimensions et correspondre ainsi à un écrouissage important, ce qui lui confère une grande rigidité.

Une configuration avantageuse est obtenue grâce au fait que l'anneau de verrouillage présente deux zones de verrouillage, qui sont disposées en vis-à-vis de part et d'autre d'un plan diamétral et qui sont reliées au pontet de déverrouillage par des tronçons de liaison qui se trouvent dans la cavité interne du corps et au fait que ces tronçons de liaison sont parallèles à la direction axiale de l'embout.

La présence de deux zones de verrouillage diamétralement opposées est connue par le document EP-A-0 651 198. On sait que, du fait de la symétrie qu'elle induit, elle améliore l'effet de verrouillage. De plus, en étant dirigés axialement comme le pontet, les tronçons de liaison sont facilement écartés par une pression du pontet.

Avantageusement, l'anneau de verrouillage est fermé sur lui-même et présente deux extrémités qui se chevauchent et qui sont susceptibles de glisser l'une contre l'autre lors d'une déformation élastique de l'anneau.

Ainsi, les deux extrémités de l'anneau qui se chevauchent sont guidées l'une par l'autre lors de la déformation élastique de l'anneau. Les extrémités n'étant pas fixées l'une à l'autre, la capacité de l'anneau à se déformer élastiquement jusqu'à ce que sa zone de verrouillage se trouve sur un diamètre permettant le déverrouillage est largement augmentée, puisque le chevauchement entre les deux extrémités de l'anneau met à disposition une "longueur morte" disponible pour augmenter ce diamètre. Outre le guidage radial précité, les extrémités de l'anneau sont maintenues axialement par le corps de l'embout, en particulier par les bords de la fente à travers laquelle dépasse le pontet, lorsque ces extrémités sont prévues sur le pontet.

L'anneau présente avantageusement des moyens qui sollicitent ses deux extrémités en contact l'une contre l'autre.

Il peut s'agir de déformations plastiques, éventuellement associées à l'élasticité générale de l'anneau.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 est une vue extérieure d'une connexion comprenant un embout conforme à l'invention ;
- la figure 2 est une coupe selon la ligne II-II de la figure 1 ;
- la figure 3 est une vue en bout selon la flèche III de la figure 1, montrant l'embout conforme à l'invention sans le tube de la connexion ;
- la figure 4 est une coupe selon la ligne IV-IV de la figure 3 ;
- la figure 5 est une vue en plan d'un anneau de verrouillage conforme à l'invention, prise dans une direction correspondant à celle de la flèche V de la figure 1 ;
- la figure 5A est une coupe selon la ligne VA-VA de la figure 5;
- la figure 6 est une vue de côté de la figure 5 ;
- les figures 7 et 8 sont des vues analogues à celles des figures 5 et 6, pour une variante de réalisation ;
- la figure 9 est une vue en bout analogue à celle de la figure 3, pour une variante de réalisation ;
- la figure 10 est une coupe selon la ligne X-X de la figure 9 ;
- la figure 11 montre le tube de la connexion de la figure 10 selon la flèche XI de cette figure ;
- la figure 12 est une vue en plan, dans une direction correspondant à celle de la figure 3, d'un organe de verrouillage selon une variante de réalisation ;
- la figure 12A est une coupe selon la ligne XIIA-XIIA de la figure 12 ; et
- la figure 13 est une vue en coupe longitudinale du corps d'un embout adapté à cette variante.

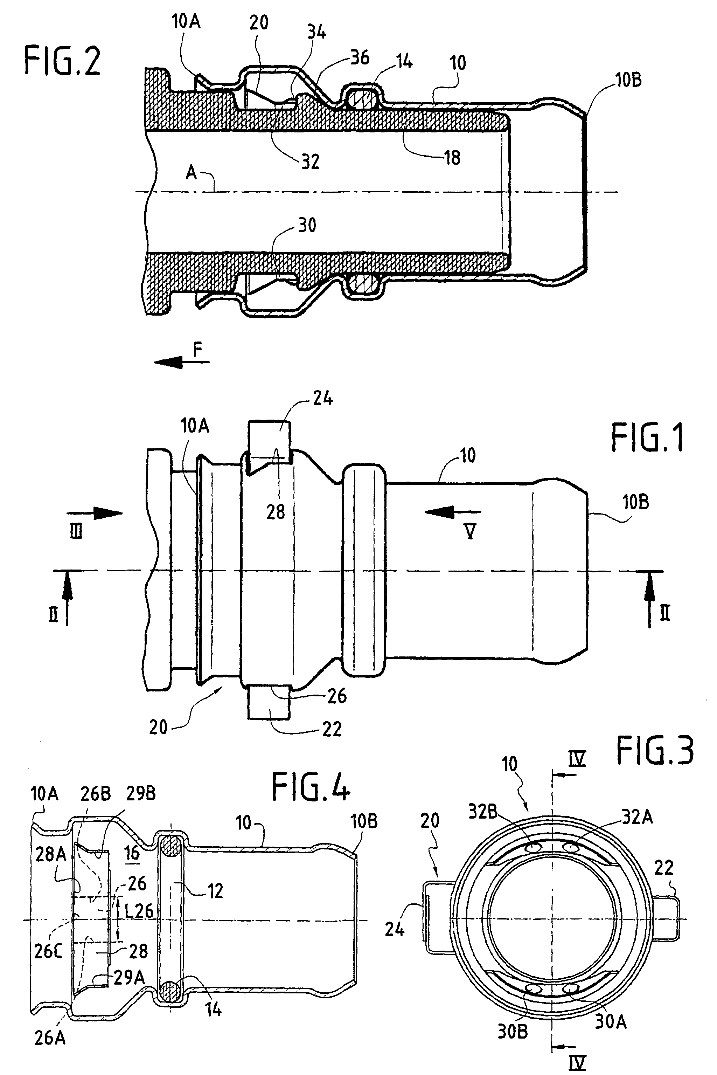

L'embout de connexion rapide des figures 1 à 4 comprend un corps 10 ayant globalement une symétrie de révolution autour d'un axe A. Ce corps présente une cavité interne dont une première partie 12 (en l'espèce, une gorge annulaire) contient un joint annulaire d'étanchéité 14.

La cavité interne comprend une deuxième partie 16 qui est située entre la première partie et l'entrée 10A du corps de l'embout. Cette entrée est celle des extrémités du corps par laquelle on introduit le tube 18 pour réaliser la connexion.

On définit la direction vers l'avant comme étant celle qui va vers l'entrée 10A du corps de l'embout, tandis que la direction vers l'arrière va vers l'extrémité opposée 10B.

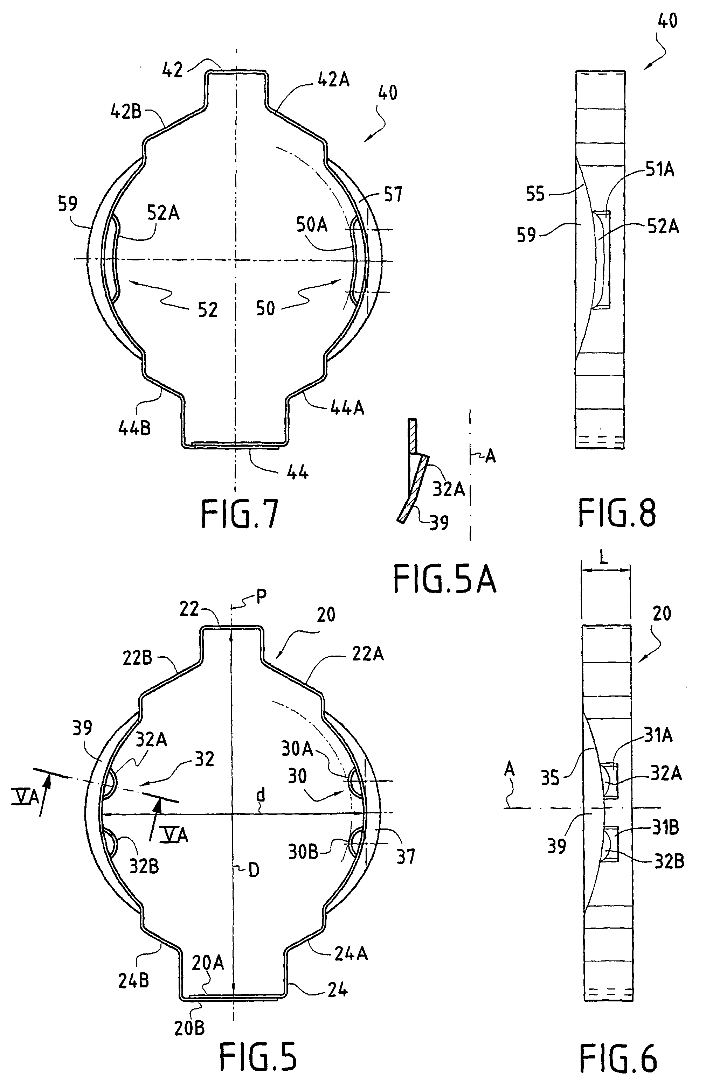

Dans la deuxième partie 16 de la cavité interne est disposé un anneau de verrouillage 20, mieux visible sur les figures 5 et 6. Cet anneau est formé à partir d'une bande de métal enroulée sur elle-même et dont les deux extrémités 20A et 20B se rejoignent.

Par exemple, la bande est réalisée en acier dit "à ressort", et son épaisseur est de l'ordre de 2/10 millimètres à 8/10 millimètres, de préférence de l'ordre de 3/10 millimètres à 4/10 millimètres.

La largeur L de la bande, mesurée dans la direction de l'axe A, est par exemple de l'ordre de 3 à 6 millimètres, de préférence de l'ordre de 5 millimètres. Comme on le voit sur la figure 5, l'anneau de verrouillage présente une forme en général oblongue, et il présente deux pontets, respectivement 22 et 24, qui sont disposés en regard l'un de l'autre selon son grand diamètre D. Les deux extrémités 20A et 20B se rejoignent pour former la région centrale du pontet 24. La bande est ainsi fermée, par exemple par soudure ou rivetage, par exemple par une construction à clin.

La paroi de la deuxième partie 16 de la cavité du corps de l'embout présente deux fentes, respectivement 26 et 28, à travers lesquelles dépassent respectivement chacun des deux pontets 22 et 24.

Le plus petit diamètre d de l'anneau de verrouillage est sensiblement perpendiculaire à son grand diamètre D. Deux zones de verrouillage, respectivement 30 et 32, sont disposées en regard de l'une de l'autre de part et d'autre du plan diamétral P correspondant au grand diamètre D en étant écartées selon le petit diamètre d. On comprend que, lorsque l'on exerce une pression sur les pontets 22 et 24 de manière à les rapprocher de l'axe A de l'embout, on écarte les deux zones de verrouillage 30 et 32.

Comme on le voit sur la figure 2, le tube 18 présente une surface d'accrochage 34, par exemple formée sur la face arrière d'un bourrelet 36. Lorsque le tube est emmanché dans l'embout, sa portée cylindrique, située entre son extrémité libre et le bourrelet 36, coopère avec le joint d'étanchéité 14. Comme on le voit sur la figure 2, les zones de verrouillage 30 et 32 reposent contre la face arrière 34, à la base du bourrelet.

Dans la mesure où l'anneau de verrouillage 20 est retenu contre un arrachement hors du corps de l'embout dans la direction F allant vers l'avant (par exemple par les bords avant 26C et 28A des fenêtres 26 et 28), les arêtes de verrouillage empêchent l'arrachement du tube hors de l'embout. Lorsque, par une pression des pontets, on écarte suffisamment l'une de l'autre les zones de verrouillage, elles déterminent entre elles une distance diamétrale qui est supérieure au diamètre du bourrelet 36, ce qui permet de séparer le tube de l'embout.

Dans la région du pontet 22 ou 24, la bande dans laquelle est formé l'anneau de verrouillage est parallèle à la direction de l'axe A de l'embout de la connexion.

Le pontet 22 est raccordé aux zones de verrouillage 30 et 32 par deux tronçons de liaison, respectivement 22A et 22B. De même, le pontet 24 est raccordé aux zones de verrouillage par les tronçons de liaison, 24A et 24B. Ces tronçons de liaison sont également parallèles à la direction de l'axe A.

L'anneau de verrouillage présente des rampes de guidage facilitant l'emmanchement de l'embout sur le tube. Les rampes, respectivement désignées par les références 37 et 39, se trouvent globalement dans le prolongement axial des zones de verrouillage, respectivement 30 et 32. Ces rampes sont écartées dans le sens allant vers l'avant, ce qui favorise l'insertion du tube dans l'embout.

Sur la figure 6, on voit que l'anneau de verrouillage 20 présente une ligne de pliage 35 qui s'étend sensiblement transversalement par rapport à la direction de l'axe A. La zone de verrouillage 32 est formée par une partie de l'anneau 20 qui se trouve à l'arrière de cette ligne 35, tandis que la rampe de guidage 37 se trouve à l'avant.

Comme on le voit mieux sur les figures 3 et 5 chacune des deux zones de verrouillage 30 et 32 comprend deux languettes de verrouillage, respectivement 30A, 30B et 32A, 32B.

Plus précisément, pour chaque zone de verrouillage, deux entailles, telles les entailles 31A et 31 B visibles sur la figure 6, sont pratiquées dans la bande, de manière à laisser subsister les languettes ou "crevés" 30A, 30B, 32A, 32B. Comme on le voit sur la figure 6, ces crevés sont rattachés à la bande par leurs bases respectives, coïncidant avec la ligne de pliage 35 qui sépare la rampe 39 de la portion de la bande dans laquelle sont pratiquées les entailles.

Ces entailles sont réalisées par un emboutissage formant un bossage, qui donne aux languettes leur forme courbe visible sur la figure 5, allant jusqu'à entailler la bande pour former le bord libre des languettes qui constitue ainsi un bord vif d'accrochage comme on le voit mieux sur la figure 5A. On voit sur la figure 6 que ces bords libres sont concaves, leur concavité étant tournée vers la base des languettes. Ces dernières sont rattachées à la bande par leurs bases respectives et par une partie de leurs côtés.

Bien entendu, selon les dimensions diamétrales du tube et de l'embout, on peut choisir de pratiquer plus ou moins d'entailles. Les arêtes de verrouillage proprement dites sont formées par les bords libres des languettes 32A et 32B réalisés par les entailles 31A et 31B.

Les figures 7 et 8 montrent un anneau de verrouillage 40 qui pourrait être utilisé dans l'embout selon l'invention, en lieu et place de l'anneau 20. Pour simplifier, on utilise sur ces figures les mêmes références numériques que sur les figures 1 à 6, augmentées de 20.

La forme générale de l'anneau 40 est la même que celle de l'anneau 20. Toutefois, les zones de verrouillage 50 et 52 comprennent chacune seulement un crevé, respectivement 50A et 52A. Comme ceux des figures 5 et 6, ces crevés sont formés par un bossage réalisé par un emboutissage allant jusqu'à pratiquer une entaille dans la bande, telle l'entaille 51A de la figure 8. Cette fois, l'outil d'emboutissage a une forme allongée selon la longueur de l'embout, de sorte que les languettes 50A et 52A s'étendent sur un secteur angulaire plus grand que les languettes 30A, 30B, 32A et 32B des figures 5 et 6. Comme ces dernières, elles sont rattachées à la bande par leur base emboutie et par une partie de leurs côtés.

Comme on le voit sur les figures 6, 8 et 10, les lignes de pliage à l'instar des lignes 35, 55 et 75 sont avantageusement concaves lorsqu'on les regarde depuis l'avant de l'anneau, c'est-à-dire depuis l'entrée de l'embout, les extrémités de ces lignes rejoignant le bord avant dudit anneau.

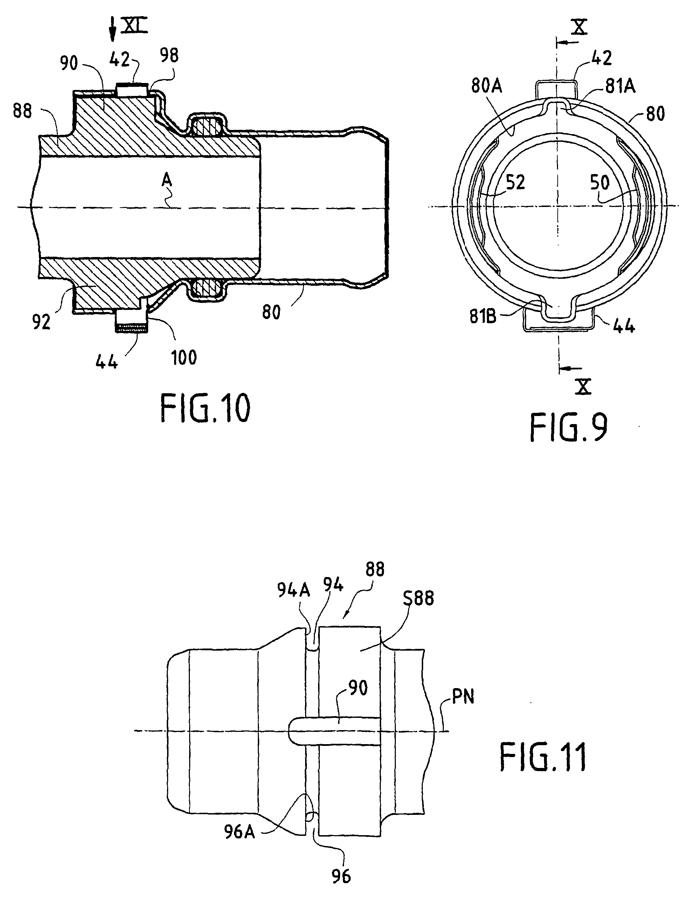

L'embout de connexion rapide des figures 9 et 10 est équipé de l'anneau de verrouillage 40 précédemment décrit en référence aux figures 7 et 8.

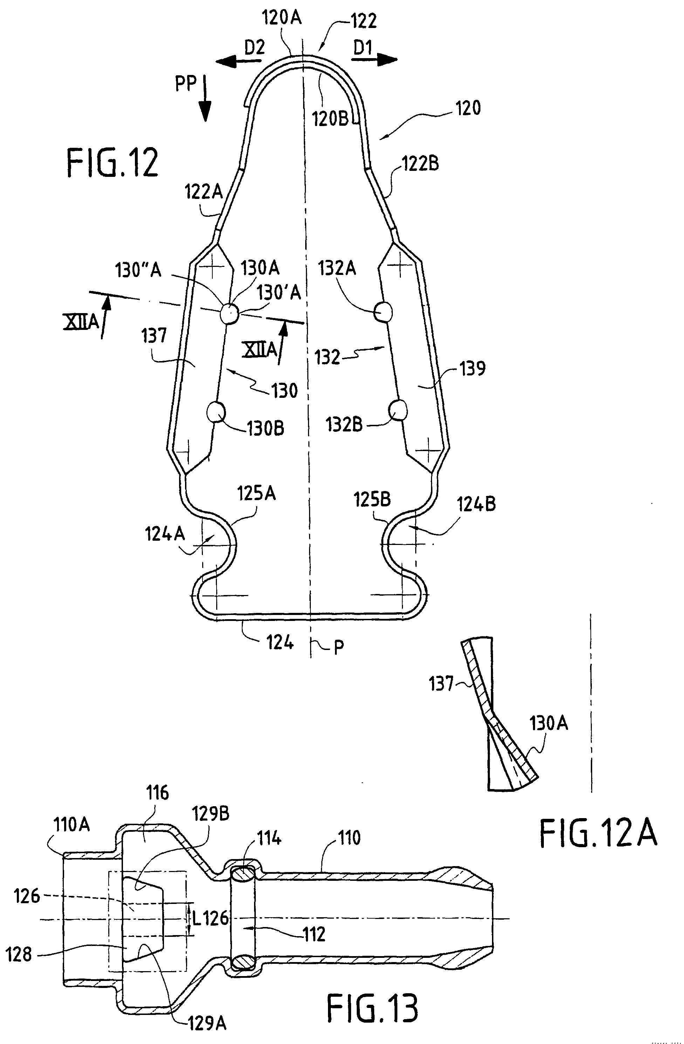

Comme le corps 10 de l'embout des figures 1 à 4, le corps 80 de cet embout est avantageusement réalisé en une seule pièce, par exemple en métal tel que de l'acier inoxydable, de l'aluminium ou de l'acier revêtu, ou bien en matière plastique. Cet embout est adapté à coopérer avec un tube 88 de conformation spéciale, qui doit être calé angulairement par rapport à lui. En effet, comme on le voit mieux sur les figures 12 et 13, le tube 88 présente deux nervures axiales de calage angulaire, respectivement 90 et 92, qui sont diamétralement opposées. Elles font saillie par rapport à la surface cylindrique S88 de ce tube. Pour son accrochage sur l'embout, le tube présente une gorge circulaire ou, plus précisément, deux portions de gorge, respectivement 94 et 96, qui s'étendent chacune sur environ ½ cercle, entre les deux nervures 90 et 92, de part et d'autre du plan diamétral PN d'alignement de ces nervures. Les surfaces d'accrochage proprement dites sont formées par les faces radiales 94A et 96A de ces gorges qui sont tournées vers l'extrémité libre du tube.

Les languettes 50A et 52A qui, étant réalisées par des bossages entaillés pour former les arêtes de verrouillage sur leurs bords libres, sont orientées vers l'axe A et pénètrent dans les gorges 94 et 96 pour coopérer avec ces faces radiales 94A et 96A. Ainsi, outre les avantages précités en matière de rigidité et d'élasticité, la conformation rentrante des arêtes de verrouillage permet d'adapter la connexion selon l'invention à des tubes de conformations diverses.

Les deux pontets 42 et 44 de l'anneau de verrouillage 40 sont respectivement adaptés aux nervures 90 et 92 du tube.

L'entrée 80A du corps de l'embout présente deux décrochements diamétralement opposés 81A et 81B, entre lesquels ses dimensions diamétrales sont maximales, pour permettre l'insertion des nervures 90 et 92 du tube. Ces décrochements s'étendent axialement environ jusqu'aux fentes 98 et 100 du corps de l'embout, à travers lesquelles passent respectivement les pontets 42 et 44 de l'anneau de verrouillage. Il faut noter qu'en lieu et place des décrochements 81A et 81 B, on aurait pu choisir d'équiper le corps de l'embout de fentes axiales raccordant l'entrée dudit embout aux fentes 98 et 100.

Sur la figure 12, on voit un anneau de verrouillage 120 qui comporte un pontet de déverrouillage 122 et deux zones de verrouillage, respectivement 130 et 132, disposées en regard l'une de l'autre, de part et d'autre d'un plan diamétral P par rapport auquel l'anneau est symétrique.

Comme les anneaux de verrouillage représentés à titre d'exemple sur les autres variantes, l'anneau 120 est fermé sur lui-même.

Ses deux extrémités 120A et 120B se chevauchent sans être fixées l'une à l'autre. Ainsi, lors d'une déformation élastique de l'anneau, ses deux extrémités glissent l'une contre l'autre. En particulier, lorsque l'on exerce une pression sur le pontet de déverrouillage 122 dans le sens de la flèche PP, le glissement des deux extrémités 120A et 120B l'une contre l'autre favorise l'écartement des zones de verrouillage 130 et 132. Ceci facilite la déformation élastique de l'anneau nécessaire au déverrouillage.

Les deux extrémités 120A et 120B sont conformées de manière à être rappelées en contact de glissement l'une contre l'autre. En particulier, comme on le voit sur la figure 12, elles présentent une forme concave lorsqu'on les considère depuis l'intérieur de l'anneau. De ce fait, elles constituent l'une pour l'autre des surfaces de rappel qui rappellent naturellement l'anneau dans sa configuration de verrouillage après une sollicitation de déverrouillage par pression sur le pontet dans le sens PP. En l'espèce, les extrémités 120A et 120B forment le pontet.

Lorsque l'on exerce une pression dans le sens PP, les deux brins de la bande situés de part et d'autre du plan diamétral P ont tendance à s'écarter. En d'autres termes, l'extrémité 120A se déplace avec la zone de verrouillage 130 selon la direction D1, tandis que l'extrémité 120B se déplace avec l'arête 132 selon la direction opposée D2. Toutefois, la face extérieure de l'extrémité 120B coopère avec la face intérieure de l'extrémité 120A et, dans la mesure où la surface que détermine cette face intérieure présente une composante dirigée dans la direction D1, cette coopération rappelle naturellement l'extrémité 120B dans la direction D1, dès que la pression dans le sens PP cesse sur le pontet.

Les extrémités 120A et 120B, qui sont en contact de glissement, sont orientées parallèlement à la direction de l'axe A de l'embout. De même, les tronçons de liaison 122A et 122B du pontet avec, respectivement, les zones de verrouillage 130 et 132 sont orientés parallèlement à la direction de l'axe A.

Entre ces tronçons de liaison et les zones de verrouillage, la bande est vrillée. Elle présente ainsi deux portions inclinées dans lesquelles elle est inclinée sur toute sa largeur par rapport à l'axe A. Les faces avant de ces portions inclinées, qui sont orientées vers l'extérieur par rapport à la direction axiale qui est celle des tronçons de liaison, forment des rampes de guidage 137 et 139 écartées vers l'avant pour l'introduction du tube dans l'embout.

Vers leurs bords arrières, ces portions inclinées portent chacune deux languettes de verrouillage, respectivement 130A, 130B et 132A, 132B, formées par un emboutissage perçant, comme indiqué précédemment. On voit, en s'intéressant par exemple à la languette 130A, que les bords libres 130'A des languettes qui forment les arêtes de verrouillage et les parties 130"A de ces languettes rattachées à la bande sont concaves, avec des concavités opposées.

Les bossages formant les languettes de verrouillage selon les différents modes de réalisation peuvent être pratiqués sur le bord arrière de l'anneau de verrouillage, le bord libre des languettes étant alors constitué par la partie de ce bord arrière qui est rapprochée de l'axe A, comme le montre la figure 12A.

A l'opposé du pontet 122, l'anneau comprend un autre pontet 124. Celui-ci est raccordé aux zones de verrouillage 130 et 132 par des tronçons de liaison, respectivement 124A et 124B. Ces tronçons de liaison sont parallèles à la direction de l'axe A de l'embout de connexion.

Comme on le voit sur la figure 12, ils présentent chacun une ondulation, respectivement 125A et 125B, dont la concavité est tournée vers l'extérieur de l'anneau. Ces ondulations permettent de caler cet anneau par rapport au corps de l'embout 110 représenté sur la figure 13.

Ce corps 110 présente une cavité interne dont une première partie 112 est apte à coopérer avec des moyens d'étanchéité pour établir une liaison étanche entre le corps de l'embout et la périphérie externe d'un tube emmanché dans ce dernier. Par exemple, cette première partie a la forme d'une gorge annulaire contenant un joint 114.

L'anneau de verrouillage 120 est destiné à être disposé dans la deuxième partie 116 de la cavité, qui est située entre la première partie 114 et l'entrée 110A du corps de l'embout.

La paroi axiale du corps de l'embout présente, dans la région de cette deuxième partie 116, deux fentes diamétralement opposées, respectivement désignées par les références 126 et 128, respectivement aptes à coopérer avec les pontets 122 et 124 de l'anneau.

La figure 13 est une coupe axiale sur laquelle normalement seule la fente 128 est visible mais, pour la clarté de l'explication, la position de la fente 126 est indiquée en traits interrompus.

L'anneau de verrouillage 120 est apte à être disposé dans le corps de l'embout en étant engagé radialement à travers la fente 128. On voit que la fente 126 présente une longueur L126, mesurée dans la direction transversale à l'axe A du corps de l'embout, qui est inférieure à la longueur de la fente 128, mesurée dans la même direction.

La fente 126 est trop petite pour permettre l'introduction de l'anneau de verrouillage dans le corps de l'embout à travers elle. L'anneau doit donc être introduit à travers la fente 128, jusqu'à ce que le pontet 122 dépasse à travers la fente 126.

Les ondulations 125A et 125B précitées sont destinées à coopérer avec les côtés 129A et 129B de la fente 128, afin de déterminer le degré d'enfoncement maximal de l'anneau de verrouillage 120 dans le corps de l'embout. On voit que lesdits côtés 129A et 129B sont inclinés pour permettre le passage des portions inclinées de l'anneau de verrouillage sur lesquelles sont formées les zones de verrouillage.

Pour permettre l'introduction radiale de l'anneau de verrouillage de la manière précitée, les zones de verrouillage 130 et 132 sont élastiquement rapprochées l'une de l'autre, puisque l'écartement entre les bords 129A et 129B de la fente 128 correspond sensiblement à l'écartement entre les creux des ondulations 125A et 125B.

De même, dans la variante des figures 1 à 4, les deux fentes 26 et 28 à travers lesquelles dépassent respectivement les pontets 22 et 24 sont différentes l'une de l'autre.

Bien que la fente 26 ne soit normalement pas visible sur la coupe de la figure 4, sa position est indiquée en trait mixte sur cette figure. On voit qu'elle présente une longueur L26, mesurée transversalement à l'axe A, qui est inférieure à celle de la fente 28. En effet, le pontet 22 ou 42 présente une longueur, mesurée dans le même sens, qui est inférieure à celle du pontet 24 ou 44.

L'anneau de verrouillage 20 ou 40 peut être introduit dans le corps de l'embout de la figure 4 par un déplacement radial à travers la fente 28 dénommée fente d'introduction. Pour ce faire, les deux zones de verrouillage 30 et 32 ou 50 et 52 sont rapprochées l'une de l'autre de manière à diminuer élastiquement le diamètre minimum de l'anneau. Celui-ci est introduit par son pontet le plus étroit 22, 42, jusqu'à ce que ce pontet dépasse à travers la fente 26, que les tronçons de liaison 22A et 22B ou 42A et 42B reposent contre les bords 26A et 26B de la fente 26 et que les tronçons de liaison 24A, 24B ou 44A, 44B coopèrent avec les côtés 29A et 29B de la fente 28 pour retenir l'anneau de verrouillage à l'intérieur du corps de l'embout.

On voit sur la figure 4 que la fente d'introduction 28 présente une partie avant élargie pour permettre le passage des rampes de guidage 37, 39 ou 57, 59 de l'anneau de verrouillage dans le corps et une partie étroite qui coopère avec l'anneau de verrouillage pour le caler angulairement. En d'autres termes, la fente 28 est évasée vers l'avant, tandis que les parties arrières de ses côtés 29A et 29B sont parallèles à l'axe A. Des jambes du pontet 44 ou 64 coopèrent avec ces parties arrière rectilignes pour caler l'anneau angulairement.

Quelle que soit la variante retenue, on constate sur les dessins que les anneaux de verrouillage 20, 40 ou 120 sont disposés dans une tranche radiale dont l'épaisseur est sensiblement égale à la largeur de la bande dans laquelle ils sont formés, dans la région du ou des pontets.

Comme indiqué précédemment, le corps de l'embout peut être réalisé en métal ou en matière plastique. Les moyens d'étanchéité peuvent être disposés dans une gorge ou être maintenus en place par une bague de blocage, elle-même fixée au corps, par exemple par encliquetage. Qu'il soit ou non en plastique, le corps peut présenter des formes de calage du tube en rotation telles que 81A et 81 B visibles sur la figure 11.

## Revendications

1. Embout de connexion rapide susceptible d'être emmanché sur un tube (18 ; 88) qui présente une surface d'accrochage (34 ; 94A, 96A) sensiblement radiale distante de son extrémité libre, l'embout comprenant un corps (10 ; 80 ; 110) qui présente une cavité interne ayant une première partie (12 ; 112) susceptible de coopérer avec des moyens d'étanchéité (14 ; 114) pour établir une liaison étanche avec le tube et une deuxième partie (16 ; 116), qui est située entre la première partie de la cavité et l'entrée (10A ; 80A ; 110A) du corps de l'embout et dans laquelle est disposé un anneau de verrouillage (20 ; 40 ; 120) retenu contre un arrachement hors du corps de l'embout par des moyens de retenue, cet anneau présentant au moins une zone de verrouillage (30, 32 ; 50, 52 ; 130, 132) située dans une région dans laquelle son rayon est minimum et au moins un pontet de déverrouillage (22, 24 ; 42, 44 ; 122, 124) situé dans une région dans laquelle son rayon est maximal, l'anneau étant susceptible, à partir d'une configuration de verrouillage dans laquelle la zone de verrouillage est apte à coopérer avec la surface d'accrochage du tube, d'être déformé élastiquement par une pression sur le pontet pour adopter une configuration de déverrouillage, la paroi de la cavité interne du corps présentant, dans sa portion axiale, au moins une fente (26, 28 ; 98, 100 ; 126, 128) qui débouche dans la deuxième partie (16 ; 116) de la cavité et à travers laquelle dépasse ledit pontet de déverrouillage, l'anneau de verrouillage étant constitué par une bande de métal déformée plastiquement pour présenter, au moins, ladite zone de verrouillage et ledit pontet,
**caractérisé en ce que** la zone de verrouillage comprend une languette (30A, 30B, 32A, 32B ; 50A, 52A ; 130A, 130B, 132A, 132B) formée par un emboutissage formant un bossage, dirigé vers l'intérieur de l'anneau de verrouillage et présentant un bord libre d'accrochage.

2. Embout selon la revendication 1, **caractérisé en ce que** le bord libre d'accrochage est formé par une portion du bossage qui est entaillée dans la bande formant l'anneau de verrouillage (20 ; 40 ; 120).

3. Embout selon la revendication 1 ou 2, **caractérisé en ce que** dans la région du pontet de déverrouillage (22, 24 ; 42, 44 ; 122, 124), la bande dans laquelle est réalisé l'anneau de verrouillage (20 ; 40 ; 120) est sensiblement parallèle à la direction axiale (A) de l'embout.

4. Embout selon l'une quelconque des revendications 1 à 3, **caractérisé en ce que** la zone de verrouillage (30, 32 ; 130, 132) comprend au moins deux languettes (30A, 30B ; 32A, 32B ; 130A, 130B, 132A, 132B) formées chacune, par un bossage ayant un bord libre.

5. Embout selon l'une quelconque des revendications 1 à 4, **caractérisé en ce que** le bord libre de la languette (30A, 30B, 32A, 32B ; 50A, 52A ; 130A, 130B, 132A, 132B) présente une concavité qui est tournée vers la partie de cette languette qui est rattachée à la bande.

6. Embout selon la revendication 5, **caractérisé en ce que** la partie (130"A) de la languette (130A) qui est rattachée à la bande présente une concavité opposée à la concavité du bord libre (130'A) de la languette.

7. Embout selon l'une quelconque des revendications 1 à 6, **caractérisé en ce que** l'anneau de verrouillage (20 ; 40 ; 120) présente deux zones de verrouillage (30, 32 ; 50, 52 ; 130, 132), qui sont disposées en vis-à-vis de part et d'autre d'un plan diamétral (P) et qui sont reliées au pontet de déverrouillage (22, 24 ; 42, 44 ; 122, 124) par des tronçons de liaison (22A, 22B, 24A, 24B ; 42A, 42B, 44A, 44B ; 122A, 122B, 124A, 124B) qui se trouvent dans la cavité interne (16 ; 116) du corps et **en ce que** ces tronçons de liaison sont parallèles à la direction axiale (A) de l'embout.

8. Embout selon l'une quelconque des revendications 1 à 7, **caractérisé en ce que** l'anneau de verrouillage (20 ; 40 ; 120) est disposé dans une tranche radiale dont l'épaisseur est sensiblement égale à la largeur (L) de la bande dans la région du pontet (22, 24 ; 42, 44 ; 122, 124) de déverrouillage, cette largeur étant mesurée selon la direction axiale (A) de l'embout.

9. Embout selon l'une quelconque des revendications 1 à 8, **caractérisé en ce que** l'anneau de verrouillage (20 ; 40 ; 120) est fermé sur lui-même et comporte un premier et un deuxième pontet (22, 24 ; 42, 44 ; 122, 124) qui passent respectivement dans une première et une deuxième fente (26, 28 ; 98 ; 100 ; 126, 128) du corps de l'embout, au moins l'un de ces pontets étant un pontet de déverrouillage qui dépasse radialement hors de la fente dans laquelle il passe, l'anneau présentant une première zone de verrouillage (30 ; 50 ; 130) située entre les deux pontets, d'un premier côté de l'anneau et une deuxième zone de verrouillage (32 ; 52 ; 132), située entre les deux pontets, de l'autre côté de l'anneau.

10. Embout selon la revendication 9, **caractérisé en ce que** les deux zones de verrouillage (30, 32 ; 50, 52 ; 130, 132) sont aptes à être élastiquement rapprochées l'une de l'autre pour permettre l'introduction de l'anneau (20 ; 40 ; 120) dans le corps par un déplacement radial à travers l'une (28 ; 128) des fentes, dite fente d'introduction, cependant que l'autre (26 ; 126) fente présente des dimensions empêchant l'introduction de l'anneau à travers elle.

11. Embout selon l'une quelconque des revendications 1 à 10, **caractérisé en ce que** le corps (10 ; 80 ; 110) de l'embout est formé en une seule pièce.

12. Embout selon l'une quelconque des revendications 1 à 11, **caractérisé en ce que** l'anneau de verrouillage (120) est fermé sur lui-même et présente deux extrémités (120A, 120B) qui se chevauchent et qui sont susceptibles de glisser l'une contre l'autre lors d'une déformation élastique de l'anneau.

## Claims

1. Quick connecter able to be fitted onto a tube (18; 88) which presents a substantially radial catching surface (34; 94A, 96A) distant from its free end, the connector comprising a body (10; 80; 110) which presents an internal cavity having a first part (12; 112) able to co-operate with sealing means (14; 114) to establish a tight connection with the tube and a second part (16; 116), which is situated between the first part of the cavity and the entry (10A; 80A; 110A) of the body of the connecter and in which is arranged a locking ring (20; 40; 120) retained against being pulled out of the body of the connecter by retaining means, this ring presenting at least one locking zone (30, 32; 50, 52; 130, 132) situated in a region in which its radius is minimum and at least one unlocking bridge (22, 24; 42, 44; 122, 124) situated in a region in which its radius is maximum, the ring being elastically deformable by pressure on the bridge, from a locking configuration in which the locking zone is able to co-operate with the catching surface of the tube, to adopt an unlocking configuration, the wall of the internal cavity of the body presenting, in its axial portion, at least one slot (26, 28; 98, 100; 126, 128) which opens into the second part (16; 116) of the cavity and through which the said unlocking bridge protrudes, the locking ring consisting of a metal strip plastically deformed to present at least the said locking zone and the said bridge,
**characterised by** the fact that the locking zone comprises a tongue (30A, 30B, 32A, 32B; 50A, 52A; 130A, 130B, 132A, 132B) formed by a stamping forming a boss, directed towards the inside of the locking ring and presenting a free catching edge.

2. Connecter as described in claim 1, **characterised by** the fact that the free catching edge is formed by a portion of the boss which is notched into the strip forming the locking ring (20; 40; 120).

3. Connector as described in claim 1 or 2, **characterised by** the fact that in the region of the unlocking bridge (22, 24; 42, 44; 122, 124), the strip in which the locking ring (20; 40; 120) is formed is substantially parallel with the axial direction (A) of the connecter.

4. Connector as described in any one of claims 1 to 3, **characterised by** the fact that the locking zone (30, 32; 130, 132) comprises at least two tongues (30A, 30B; 32A, 32B; 130A, 130B, 132A, 132B) each formed by a boss having a free edge.

5. Connector as described in any one of claims 1 to 4, **characterised by** the fact that the free edge of the tongue (30A, 30B, 32A, 32B; 50A, 52A; 130A, 130B, 132A, 132B) presents a concavity which is turned towards the part of this tongue which is attached to the strip.

6. Connector as described in claim 5, **characterised by** the fact that the part (130"A) of the tongue (130A) which is attached to the strip presents a concavity opposed to the concavity of the free edge (130'A) of the tongue.

7. Connector as described in any one of claims 1 to 6, **characterised by** the fact that the locking ring (20; 40; 120) presents two locking zones (30, 32; 50, 52; 130, 132) which are arranged facing on either side of a diametric plane (P) and which are connected to the unlocking bridge (22, 24; 42, 44; 122, 124) by connecting sections (22A, 22B, 24A, 24B; 42A, 42B, 44A, 44B; 112A, 122B 124A, 124B) which are situated in the internal cavity (16; 116) of the body and by the fact that these connecting sections are parallel with the axial direction (A) of the connecter.

8. Connecter as described in any one of claims 1 to 7, **characterised by** the fact that the locking ring (20; 40; 120) is arranged in a radial slice, the thickness of which is substantially equal to the width (L) of the strip in the region of the unlocking bridge (22, 24; 42, 44; 122, 124), this width being measured in the axial direction (A) of the connector.

9. Connector as described in any one of claims 1 to 8, **characterised by** the fact that the locking ring (20; 40; 120) is closed on itself and includes a first and a second bridge (22, 24; 42, 44; 122, 124) which respectively pass into a first and a second slot (26, 28; 98; 100; 126, 128) of the body of the connecter, at least one of these bridges being an unlocking bridge which protrudes radially out of the slot into which it passes, the ring having a first locking zone (30; 50; 130) situated between the two bridges, on a first side of the ring, and a second locking zone (32; 52; 132) situated between the two bridges, on the other side of the ring.

10. Connector as described in claim 9, **characterised by** the fact that the two locking zones (30, 32; 50, 52; 130, 132) are able to be elastically brought towards each other to permit introduction of the ring (20; 40; 120) into the body by radial displacement through one (28; 128) of the slots, called the introduction slot, while the other (26; 126) slot has dimensions preventing the introduction of the ring through it.

11. Connecter as described in any one of claims 1 to 10, **characterised by** the fact that the body (10; 80; 110) of the connecter is formed in one piece.

12. Connector as described in any one of claims 1 to 11, **characterised by** the fact that the locking ring (120) is closed on itself and presents two ends (120A, 120B) which overlap and which are able to slide one against the other on elastic deformation of the ring.

## Patentansprüche

1. Schnellverbindungsstück, das auf ein Rohr (18; 88) aufgepresst werden kann, mit einer im Wesentlichen radialen Ankopplungsfläche (34;94A,96A), die von seinem freien Ende entfernt ist, wobei das Verbindungsstück einen Körper (10; 80; 110) umfässt, der einen inneren Hohlraum mit einem ersten Teil (12; 112), der imstande ist, mit Dichtmitteln (14; 114) zusammenzuwirken, um eine dichte Verbindung mit dem Rohr herzustellen, und mit einem zweiten Teil (16; 116), der sich zwischen dem ersten Teil des Hohlraums und dem Zugang (10A; 80A, 110A) des Körpers des Verbindungsstücks befindet, aufweist, in dem ein Verriegelungsring (20; 40; 120) angeordnet ist, der durch Rückhaltemittel gegen eine Verzahnung außerhalb des Verbindungsstückkörpers gehalten wird, wobei dieser Ring mindestens eine Verriegelungszone (30, 32; 50, 52; 130, 132), die sich in einem Bereich befindet, in dem sein Radius minimal ist, und wenigstens einen Entriegelungsbügel (22, 24; 42, 44; 122, 124), der sich in einem Bereich befindet, in dem sein Radius maximal ist, aufweist, wobei der Ring ausgehend von einer Verriegelungskonfiguration, in der die Verriegelungszone fähig ist, mit der Kopplungsfläche des Rohrs zusammenzuwirken, durch einen Druck auf den Bügel elastisch verformt werden kann, um eine Entriegelungskonfiguration anzunehmen, wobei die Wand des inneren Hohlraums des Körpers in ihrem axialen Abschnitt wenigstens einen Schlitz (26; 28; 98, 100; 126, 128) aufweist, der in den zweiten Teil (16; 116) des Hohlraums mündet und durch den Entriegelungsbügel vorsteht, wobei der Verriegelungsring aus einem plastisch verformten Metallband gebildet ist, um mindestens die Verriegelungszone und den Bügel aufzuweisen, **dadurch gekennzeichnet, dass** die Verriegelungszone eine Zunge (30A, 30B, 32A, 32B; 50A, 52A; 130A, 130B, 132A, 132B) umfasst, die durch Formtreiben geformt ist und einen Buckel bildet, der in den Innenraum der Verriegelungsrings gerichtet ist und einen freien Kopplungsrand aufweist.

2. Verbindungsstück nach Anspruch 1, **dadurch gekennzeichnet, dass** der freie Kopplungsrand aus einem Abschnitt des Buckels gebildet ist, der sich in das Band, das den Verriegelungsring (20; 40; 120) formt, einkerbt.

3. Verbindungsstück nach Anspruch 1 oder 2, **dadurch gekennzeichnet, dass** in dem Bereich des Entriegelungsbügels (22, 24; 42, 44; 122, 124) der Streifen, in dem der Verrieglungsring (20; 40; 120) verwirklicht ist, im Wesentlichen parallel zur Achsrichtung (A) des Verbindungsstücks ist.

4. Verbindungsstück nach einem der Ansprüche 1 bis 3, **dadurch gekennzeichnet, dass** die Verriegelungszone (30, 32; 130, 132) mindestens zwei Zungen (30A, 30B; 32A, 32B; 130A, 130B, 132A, 132B) umfasst, die jeweils aus einem Buckel mit einem freien Rand geformt sind.

5. Verbindungsstück nach einem der Ansprüche 1 bis 4, **dadurch gekennzeichnet, dass** der freie Rand der Zunge (30A, 30B; 32A, 32B; 50A, 52A; 130A, 130B, 132A, 132B) eine Konkavität aufweist, die dem Teil dieser Zunge gewandt ist, der an dem Band befestigt ist.

6. Verbindungsstück nach Anspruch 5, **dadurch gekennzeichnet, dass** der Teil (130"A) der Zunge (130A), der an dem Band befestigt ist, eine Konkavität aufweist, die zu der Konkavität des freien Rands (130'A) der Zunge entgegengesetzt ist.

7. Verbindungsstück nach einem der Ansprüche 1 bis 6, **dadurch gekennzeichnet, dass** der Verriegelungsring (20; 40, 120) zwei Verriegelungszonen (30, 32; 50, 52; 130, 132) aufweist, die beiderseits einer mittigen Symmetrieebene (P) einander gegenüberliegend angeordnet sind und die über Verbindungsabschnitte (22A, 22B, 24A, 24B; 42A, 42B, 44A, 44B; 122A, 122B, 124A, 124B), die sich in dem inneren Hohlraum (16; 116) des Körpers befinden, mit dem Entriegelungsbügel (22, 24; 42, 44; 122, 124) verbunden sind, und dadurch, dass diese Verbindungsabschnitte parallel zur Achsrichtung (A) des Verbindungsstücks sind.

8. Verbindungsstück nach einem der Ansprüche 1 bis 7, **dadurch gekennzeichnet, dass** der Verriegelungsring (20; 40; 120) in einem radialen Bereich angeordnet ist, dessen Ausdehnung im Wesentlichen der Breite (L) des Bands im Bereich des Entriegelungsbügels (22, 24; 42, 44; 122, 124) gleich ist, wobei diese Breite entlang der Achsrichtung (A) des Verbindungsstücks gemessen ist.

9. Verbindungsstück nach einem der Ansprüche 1 bis 8, **dadurch gekennzeichnet, dass** der Verriegelungsring (20; 40; 120) über sich selbst geschlossen wird und einen ersten und einen zweiten Bügel (22, 24; 42, 44; 122, 124) umfasst, die in einem ersten bzw. zweiten Schlitz (26, 28; 98; 100; 126; 128) des Körpers des Verbindungsstücks verlaufen, wobei zumindest einer dieser Bügel ein Entriegelungsbügel ist, der radial aus dem Schlitz, in dem er verläuft, vorsteht, wobei der Ring eine erste Verriegelungszone (30; 50; 130), die sich zwischen den beiden Bügeln auf einer ersten Seite des Rings befindet, und eine zweite Verriegelungszone (32; 52; 132), die sich zwischen den beiden Bügeln auf der anderen Seite des Rings befindet; aufweist.

10. Verbindungsstück nach Anspruch 9, **dadurch gekennzeichnet, dass** die zwei Verriegelungszonen (30, 32; 50, 52; 130, 132) auf elastische Weise einander genähert werden können, um das Einführen des Rings (20; 40; 120) in den Körper durch eine radiale Verlagerung durch einen der Schlitze (28; 128), den sogenannten Einführungsschlitz, hindurch zu ermöglichen, während der andere Schlitz (26; 126) Abmessungen aufweist, die das Einführen des Rings durch ihn hindurch verhindern.

11. Verbindungsstück nach einem der Ansprüche 1 bis 10, **dadurch gekennzeichnet, dass** der Körper (10; 80; 110) des Verbindungsstücks einteilig ausgebildet ist.

12. Verbindungsstück nach einem der Ansprüche 1 bis 11, **dadurch gekennzeichnet, dass** der Verriegelungsring (120) über sich selbst geschlossen wird und zwei Enden (120A, 12B) aufweist, die übereinandergreifen und bei einer elastischen Verformung des Rings gegeneinander gleiten können.
